# EUROPEAN PATENT APPLICATION

(11) **EP 4 737 937 A2**
(43) Date of publication of application: **06.05.2026**
(21) Application number: 25201342.0
(22) Date of filing: 10.09.2025
(51) Int. Cl.: G01S 7/02, G01S 13/86, G01S 13/931, G01S 7/03

(54) **AUTOMOTIVE MODULAR RADAR DEVICE**

(30) Priority: 01.11.2024 TW 113141904
(71) Applicant: Arcadyan Technology Corporation, Hsinchu City 30071 (TW)
(72) Inventor: Chan, Yi-Chen, 30071 Hsinchu City (TW); Kuo, Shin-Lung, 30071 Hsinchu City (TW)
(74) Representative: Stevens Hewlett & Perkins

(57) **Abstract**

An automotive modular radar device comprises a bracket module and a radar module. The bracket module comprises a bracket. The bracket comprises a connected plate and a fixed plate. The connected plate is used to be fixed to a vehicle. The bottom edge of the fixed plate is disposed on the connected plate. An angle is formed between the bottom edge and the side of the fixed plate, and the angle is between 0 and 90 degrees. The radar module comprises a radar. The radar comprises a casing, a circuit board, an antenna module and a processing unit. One side of the casing is fixed on the side of the fixed plate. The circuit board is disposed in the casing. The antenna module is disposed on the circuit board. The processing unit is disposed on the circuit board and electrically connected to the antenna module.

## Description

### CROSS-REFERENCE TO RELATED APPLICATION

This application claims the priority of Taiwanese patent application No. 113141904, filed on November 1, 2024, which is incorporated herewith by reference.

### BACKGROUND OF THE INVENTION

### 1. Field of the Invention

The present invention relates generally to a radar device, and more particularly, to an automotive modular radar device able to isolate and exclude external moisture and dust.

### 2. The Prior Arts

Automotive Radar is a sensing technology applied to vehicles, mainly used to detect the surrounding environment to enhance the safety and autonomous driving capabilities of the vehicle. Automotive radar emits electromagnetic waves through the antenna and receives reflected signals to measure the distance, speed and direction of the target object. It has strong anti-interference capability and is suitable for operating in various weather and lighting conditions.

The functions of automotive radar include adaptive cruise control, blind spot detection, emergency braking assistance, lane keeping assistance and parking assistance, etc. The adaptive cruise control function can help the vehicle maintain a safe distance from the vehicle in front at different speeds and achieve automatic acceleration or deceleration. The blind spot detection feature detects blind spots on the sides or rear of the vehicle and alerts the driver to potential hazards. The emergency brake assist function can detect objects ahead and actively brake when a collision is imminent, reducing the risk of an accident. The lane keeping assistance function can combine with the image capture unit to detect the vehicle's driving trajectory and keep the vehicle driving in the lane. Parking assistance feature helps drivers park safely in tight parking lots or garages.

The types of automotive radar include short-range radar, mid-range radar and long-range radar. Short-range radar is mainly used for functions such as blind spot detection, vehicle surrounding monitoring, and parking assistance. Mid-range radar is commonly used for forward and rearward vehicle detection, such as adaptive cruise control and collision prevention systems. Long-range radar is responsible for detection at longer distances and is often used in automatic cruise control systems on highways.

However, the conventional automotive radar is usually installed directly on the vehicle, and the angle is fixed and cannot be changed. As a result, the range of the field-of-view (FOV) of the conventional automotive radar is fixed and is not adjustable.

Furthermore, the waterproof and dustproof effects of conventional automotive radars are poor and cannot meet the standards of international protection level certification.

In addition, each position of the vehicle can only be installed with one vehicle radar, instead of multiple vehicle radars. As a result, each position of the vehicle can only rely on the FOV of one vehicle radar for detection, and the detection range is quite restricted and prone to dead ends.

In addition, the conventional vehicle radar can only detect the presence or absence of an object, but cannot know what the object actually is.

### SUMMARY OF THE INVENTION

A primary objective of the present invention is to provide an automotive modular radar device, which can adjust the angle of the radar module by replacing the bracket module.

Another objective of the present invention is to provide an automotive modular radar device that can provide good waterproof and dustproof effects.

Another objective of the present invention is to provide an automotive modular radar device with an expanded detection range.

Yet another objective of the present invention is to provide an automotive modular radar device that can capture actual images of objects detected by the radar.

In order to achieve the aforementioned objectives, the present invention provides an automotive modular radar device to be installed on a vehicle. The automotive modular radar device comprises a bracket module and a radar module; the bracket module comprises a bracket and the bracket comprises a connected plate and a fixed plate; wherein the connected plate is to be fixed to the vehicle; the fixed plate has a bottom edge and one side, an angle is formed between the bottom edge and the side edge of the fixed plate, and the angle is greater than 0 degrees and less than 90 degrees, and the bottom edge of the fixed plate is disposed on the connected plate; the radar module comprises a radar, and the radar comprises a casing, a circuit board, an antenna module, and a processing unit; wherein one side of the casing is fixed to the side of the fixed plate, the circuit board is disposed inside the casing, the antenna module is disposed on the circuit board, the processing unit is disposed on the circuit board and is electrically connected to the antenna module; the casing covers the circuit board, the antenna module, and the processing unit to isolate and exclude external moisture and dust.

In some embodiments, the bracket comprises a fastener, the connected plate is plate-shaped and has a first lock hole, the fastener passes through the first lock hole and fixes the connected plate to a vehicle.

In some embodiments, the bracket comprises a fastener, the fixed plate is plate-shaped and the side of the fixed plate has a second lock hole, and one side of the casing has a third lock hole, the fastener passes through the second lock hole and the third lock hole, so that one side of the casing is fixed to the side of the fixed plate.

In some embodiments, the casing comprises an upper casing, a lower casing, and a waterproof gasket; the lower casing is combined with the upper casing, the waterproof gasket is disposed in the upper casing, the lower casing, or between the upper casing and the lower casing, and surrounding the outside of the circuit board.

In some embodiments, the lower casing or the upper casing comprises a waterproof and breathable device, and the waterproof and breathable device is used to prevent moisture from entering between the upper casing and the lower casing from the outside.

In some embodiments, the lower casing comprises a signal connection part, and the signal connection part comprises a waterproof gasket.

In some embodiments, the bracket module comprises a first bracket, the first bracket comprises two connected plates, two fixed plates, and a bottom plate; the bottom edges of the fixed plates are respectively disposed on inner sides of the connected plates, each fixed board has a first side and a second side, and a first angle is formed between the bottom edge and the second side of each fixed board, and the first angle is greater than 0 degrees and less than 90 degrees, a first side and a second side of the bottom plate are respectively disposed on inner sides of the first sides of the fixed plates, the radar module comprises a first radar, and a first side and a second side of the casing of the first radar are respectively fixed to the inner sides of the second sides of the fixed plates.

In some embodiments, the bracket module comprises a first bracket, the first bracket comprises a connected plate and two fixed plates; the inner sides of the bottom edges of the fixed plates are respectively disposed on a first side and a second side of the connected plate, each fixed plate has a first side and a second side, and a first angle is formed between the bottom edge and the first side of each fixed plate, and the first angle is greater than 0 degrees and less than 90 degrees; a second angle is formed between the bottom edge and the second side of each fixed plate, and the second angle is greater than 0 degrees and less than 90 degrees; the radar module comprises a first radar and a second radar, a first side and a second side of the casing of the first radar are respectively fixed to the inner sides of the first sides of the fixed plates; a first side and a second side of the casing of the second radar are respectively fixed to the inner sides of the second sides of the fixed plates.

In some embodiments, the bracket module comprises a first bracket and a second bracket; the first bracket comprises a connected plate and a fixed plate, the bottom edge of the fixed plate of the first bracket is disposed on an inner side of the connected plate of the first bracket, the fixed plate of the first bracket has a first side and a second side, a first angle is formed between the bottom edge and the first side of the fixed plate of the first bracket, the first angle is greater than 0 degrees and less than 90 degrees, a second angle is formed between the bottom edge and the second side of the fixed plate of the first bracket, and the second angle is greater than 0 degrees and less than 90 degrees; the second bracket comprises a connected plate and a fixed plate, the bottom edge of the fixed plate of the second bracket is disposed on an inner side of the connected plate of the second bracket, the fixed plate of the second bracket has a first side and a second side, a first angle is formed between the bottom edge and the first side of the fixed plate of the second bracket, the first angle is greater than 0 degrees and less than 90 degrees, a second angle is formed between the bottom edge and the second side of the fixed plate of the second bracket, and the second angle is greater than 0 degrees and less than 90 degrees; the radar module comprises a first radar and a second radar, a first side and a second side of the casing of the first radar are respectively fixed to the inner side of the first side of the fixed plate of the first bracket and the inner side of the first side of the fixed plate of the second bracket, a first side and a second side of the casing of the second radar are respectively fixed to the inner side of the second side of the fixed plate of the first bracket and the inner side of the second side of the fixed plate of the second bracket.

In some embodiments, the automotive modular radar device further comprises an adapter seat and an image capturing device, the adapter seat is disposed on the bracket, and the image capturing device is disposed on the adapter seat.

In some embodiments, the bracket further comprises a positioning plate, the positioning plate is provided on the fixed plate, the adapter seat comprises a base and a cover, the base is fixed to the positioning plate, and the cover covers the connected plate and the positioning plate and has a through hole, and the image capturing device is disposed on the base and penetrates the through hole.

In some embodiments, the adapter seat comprises a base and a cover, the base is fixed on the inner side of the top of the cover, the cover covers the connected plate and has a through hole, and the image capturing device is disposed on the base and penetrates the through hole.

The effect of the present invention is that the automotive modular radar device of the present invention can adjust the angle of the radar module by replacing the bracket module, so that the range of FOV of the automotive modular radar device of the present invention can be adjusted.

Furthermore, the casing can provide good waterproof and dustproof effects, and complies with the IP67 and IP69K specifications of the International Protection Marking.

In addition, the bracket module can be used for installing one or multiple radars. Therefore, some positions of the vehicle can use the field of view of one radar for detection, and some positions of the vehicle can use the fields of view of multiple radars for detection The detection range is expanded and blind spots are less likely to occur.

In addition, the bracket module can be used for installing one or more image capturing devices through an adapter. Therefore, the image capturing device can capture the actual image of the object detected by the radar, so as to know what the object actually is.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a perspective view of the first embodiment of the present invention.
FIG. 2 is an exploded view of the first embodiment of the present invention.
FIG. 3 is an exploded view of the radar according to the first embodiment of the present invention.
FIG. 4 is a side view of the first embodiment of the present invention.
FIG. 5 is a side view of the second embodiment of the present invention.
FIG. 6 is a perspective view of the third embodiment of the present invention.
FIG. 7 is an exploded view of the third embodiment of the present invention.
FIG. 8 is a side view of the third embodiment of the present invention.
FIG. 9 is a side view of the fourth embodiment of the present invention.
FIG. 10 is a perspective view of the fifth embodiment of the present invention.
FIG. 11 is an exploded view of the fifth embodiment of the present invention.
FIG. 12 is a side view of the fifth embodiment of the present invention.
FIG. 13 is a side view of the sixth embodiment of the present invention.
FIG. 14 is a perspective view of the seventh embodiment of the present invention.
FIG. 15 is an exploded view of the seventh embodiment of the present invention.
FIG. 16 is a cross-sectional view taken along line XVI-XVI in FIG. 14.
FIG. 17 is a perspective view of the eighth embodiment of the present invention.
FIG. 18 is an exploded view of the eighth embodiment of the present invention.
FIG. 19 is a cross-sectional view taken along line XIX-XIX in FIG. 17.
FIG. 20 is a perspective view of the ninth embodiment of the present invention.
FIG. 21 is an exploded view of the ninth embodiment of the present invention.
FIG. 22 is a cross-sectional view taken along line XXII-XXII in FIG. 20.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

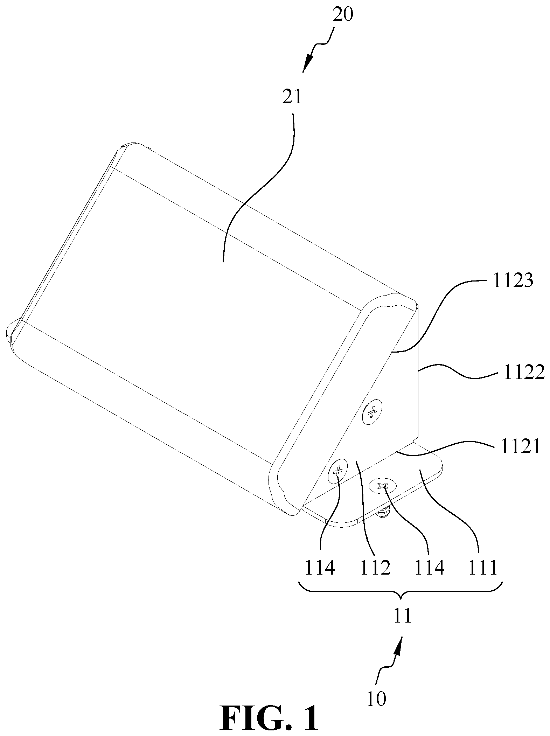

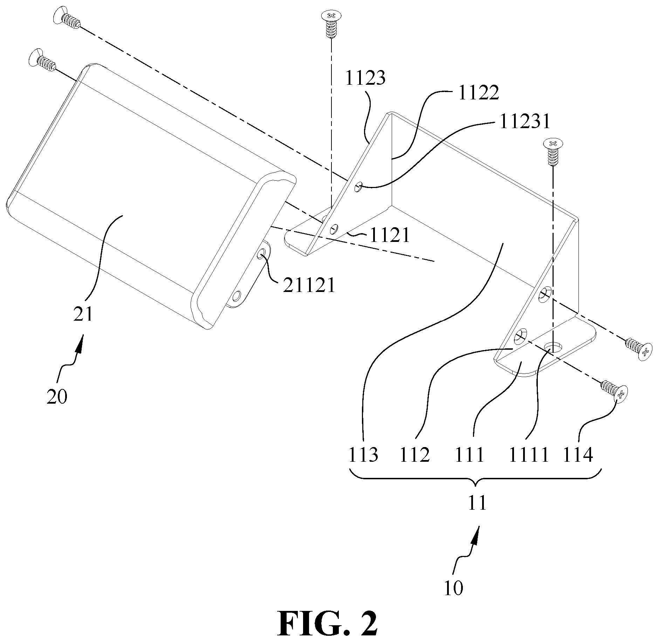

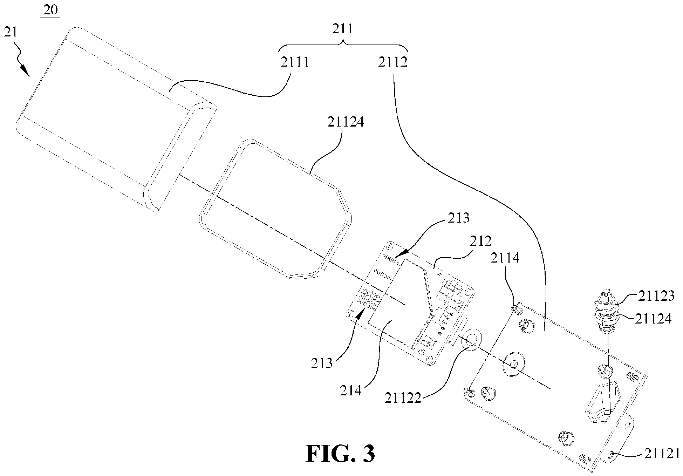

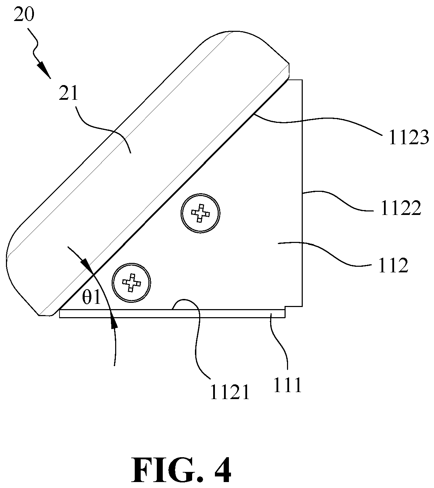

FIG. 1 is a perspective view of the first embodiment of the present invention, FIG. 2 is an exploded view of the first embodiment of the present invention, FIG. 3 is an exploded view of the radar according to the first embodiment of the present invention, and FIG. 4 is a side view of the first embodiment of the present invention. As shown in FIGS. 1, 2 and 3, the present invention provides automotive modular radar device for installation on a vehicle (not shown). The automotive modular radar device of the present invention comprises a bracket module 10 and a radar module 20. The bracket module 10 comprises a first bracket 11. The first bracket 11 comprises two connected plates 111, two fixed plates 112, a bottom plate 113, and a plurality of fasteners 114. Each connected plate 111 is plate-shaped and has a first lock hole 1111. The fasteners 114 pass through the first lock holes 1111 and are used to fix the connected plates 111 to the vehicle. Each fixed plate 112 is plate-shaped and has a bottom edge 1121, a first side 1122, and a second side 1123. The bottom edges 1121 of the fixed plates 112 are respectively disposed on the inner side of the connected plates 111. The second side 1123 of each fixed plate 112 has a plurality of second lock holes 11231. There is a first angle θ1 formed between the bottom edge 1121 and the second side 1123 of each fixed plate 112. The first angle θ1 is greater than 0 degrees and less than 90 degrees. A first side and a second side of the bottom plate 113 are respectively disposed one the inner sides the first sides 1122 of the fixed plates 112. The radar module 20 comprises a first radar 21, and the first radar 21 comprises a casing 211, a circuit board 212, an antenna module 213, and a processing unit 214. A first side of the casing 211 has two third lock holes 21121, and a second side of the casing 211 has two third lock holes 21121. The fasteners 114 pass through the second lock holes 11231 and the third lock holes 21121 respectively so that the first side and the second side of the casing 211 are fixed to the inner sides of the second sides 1123 of the fixed plates 112 respectively. The circuit board 212 is disposed inside the casing 211, the antenna module 213 is disposed on the circuit board 212, and the processing unit 214 is disposed on the circuit board 212 and is electrically connected to the antenna module 213. The casing 211 covers the circuit board 212, the antenna module 213, and the processing unit 214 to isolate and exclude the external moisture and dust. In some other embodiments, the antenna module 213 can be separated from the circuit board 212 and electrically connected to the circuit board 212.

As shown in FIG. 3, in the first embodiment, the casing 211 comprises an upper casing 2111, a lower casing 2112, and a waterproof gasket 2113. The upper casing 2111 and the lower casing 2112 are combined through a plurality of fasteners 2114. The waterproof gasket 2113 is disposed in the upper casing 2111, surrounding the outside of the circuit board 212, and is used to isolate and exclude the external moisture and dust. In other embodiments, the waterproof gasket 2113 can be disposed in the lower casing 2112 or between the upper casing 2111 and the lower casing 2112 (not shown), surrounding the outside of the circuit board 212 and isolates from the external moisture and dust. In other embodiments, the upper casing 2111 and the lower casing 2112 are in direct contact and ultrasonic combination is used to seal the contact part between the upper casing 2111 the lower casing 2112, so that a waterproof gasket 2113 is not required to isolate and exclude the external moisture and dust. As shown in FIG. 3, in another embodiment, the lower casing 2112 comprises a waterproof and breathable device 21122. The waterproof and breathable device 21122 comprises a breathable membrane or a breathable raft to allow air circulation and prevent moisture from entering from between the upper casing 2111 and the lower casing 2112. In yet another embodiment, the waterproof and breathable device 21122 can be disposed on the upper casing 2111 (not shown) to prevent moisture from entering between the upper casing 2111 and the lower casing 2112 from the outside. As shown in FIG. 3, in the first embodiment, the lower casing 2112 comprises a signal connection part 21123. The signal connection part 21123 comprises a waterproof gasket 21124. The waterproof gasket 21124 is used to isolate and exclude external moisture and dust. In this way, through the waterproof gasket 2113, the waterproof breathable device 21122, and the waterproof gasket 21124, the radar module 20 can comply with the IP67 and IP69K specifications of the International Protection Marking.

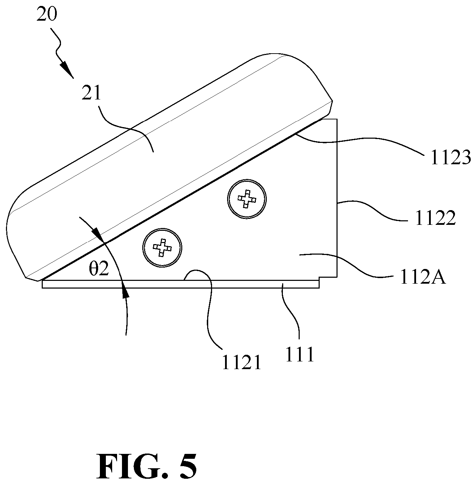

FIG. 5 is a side view of the second embodiment of the present invention. As shown in FIG. 5, the difference between the second embodiment and the first embodiment is that the bottom edge 1121 of each fixed plate 112A is longer than the bottom edge 1121 of each fixed plate 112, the first side 1122 of each fixed plate 112A is shorter than the first side 1122 of the fixed plate 112, and the second side 1123 of each fixed plate 112A is longer than the second side 1123 of each fixed plate 112. Therefore, the first angle θ1 between the bottom edge 1121 and the second side 1123 of each fixed plate 112A is smaller than the first angle θ2 between the bottom edge 1121 and the second side 1123 of each fixed plate 112.

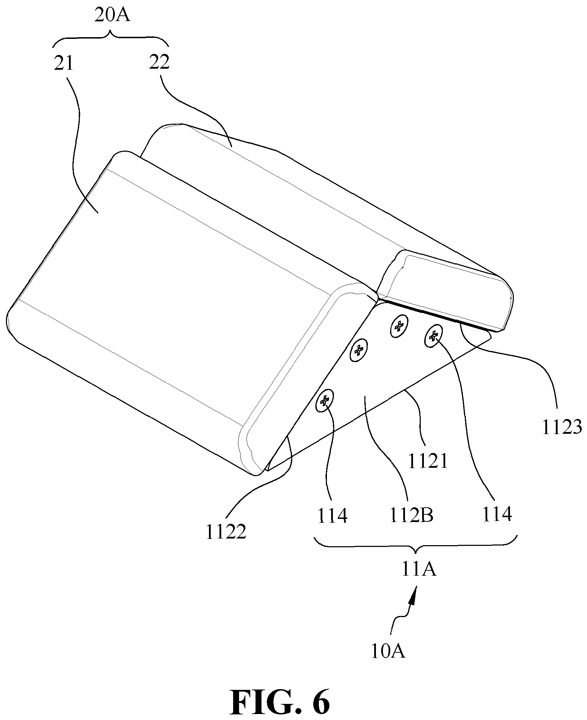

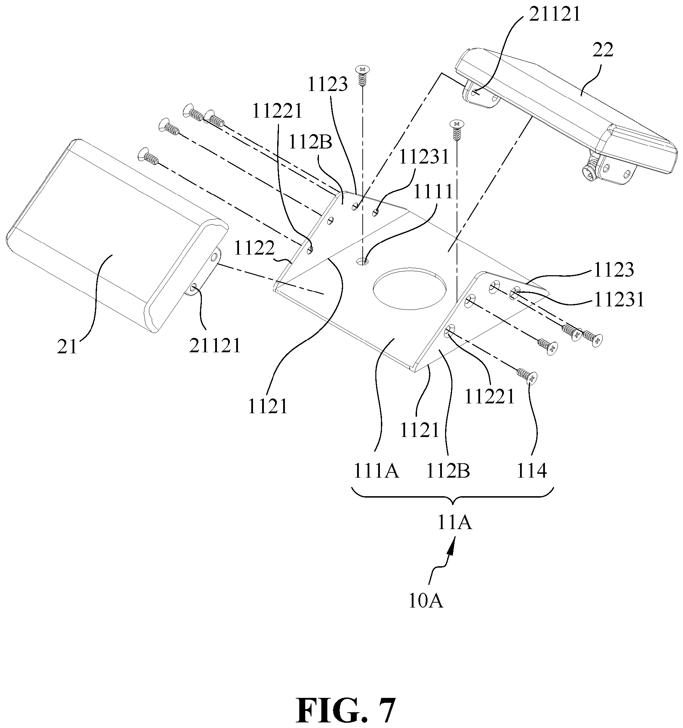

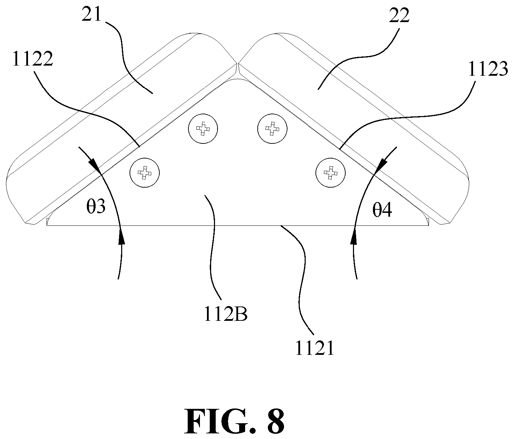

FIG. 6 is a perspective view of the third embodiment of the present invention, FIG. 7 is an exploded view of the third embodiment of the present invention, and FIG. 8 is a side view of the third embodiment of the present invention. As shown in FIGS. 6, 7 and 8, the difference between the third embodiment and the first embodiment is that: first, the bracket module 10A comprises a first bracket 11A, and the first bracket 11A comprises a connected plate 111A, two fixed plates 112B, and a plurality of fasteners 114. The inner sides of the bottom edges 1121 of the fixed plates 112B are respectively disposed on a first side and a second side of the connected plate 111A. The first side 1122 of each fixed plate 112B has a plurality of second lock holes 11221. There is a first angle θ3 formed between the bottom edge 1121 and the first side 1122 of each fixed plate 112B and the first angle θ3 is greater than 0 degrees and less than 90 degrees. There is a second angle θ4 formed between the bottom edge 1121 and the second side 1123, and the second angle θ4 is greater than 0 degrees and less than 90 degrees. Secondly, the radar module 20A comprises a first radar 21 and a second radar 22, a first side and a second side of the casing 211 of the first radar 21 are respectively fixed to the inner sides of the first sides 1122 of the fixed plates 112B, and a first side and a second side of the casing 211 of the second radar 22 are respectively fixed to the inner sides of the second sides 1123 of the fixed plates 112B.

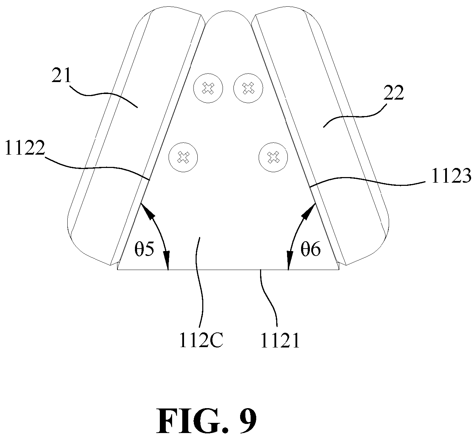

FIG. 9 is a side view of the fourth embodiment of the present invention. As shown in FIG. 9, the difference between the fourth embodiment and the third embodiment is that the bottom edge 1121 of each fixed plate 112C is shorter than the bottom edge of each fixed plate 112B, the first side 1122 of each fixed plate 112C is longer than the first side 1122 of the plate 112B, and the second side 1123 of each fixed plate 112C is longer than the second side 1123 of each fixed plate 112B. Therefore, the first angle θ5 formed between the bottom edge 1121 and the first side 1122 of each fixed plate 112C is greater than the first angle θ3 formed between the bottom edge 1121 and the first side 1122 of each fixed plate 112B, and the second angle θ6 formed between the bottom edge 1121 and the second side 1123 of each fixed plate 112C is greater than the second angle θ4 formed between the bottom edge 1121 and the second side 1123 of each fixed plate 112B.

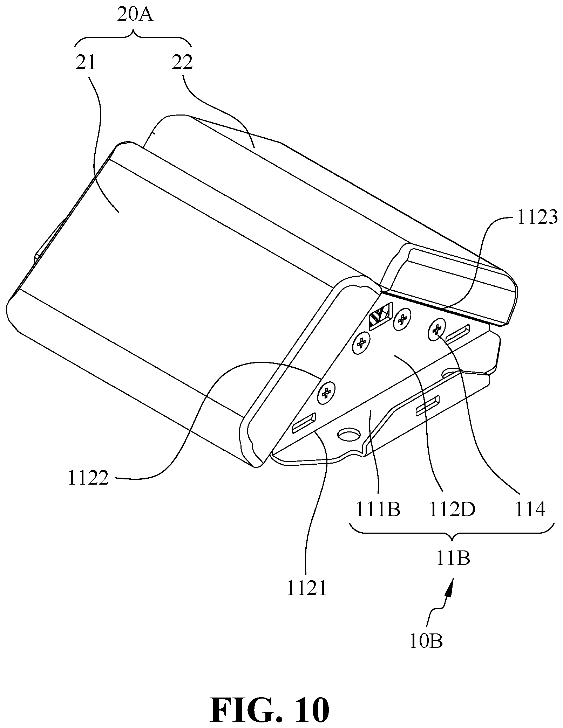

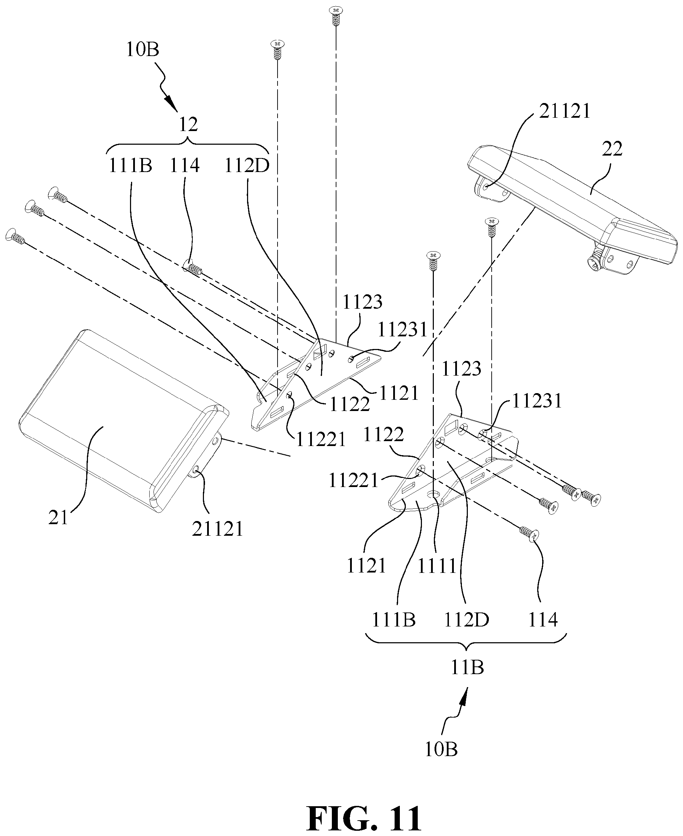

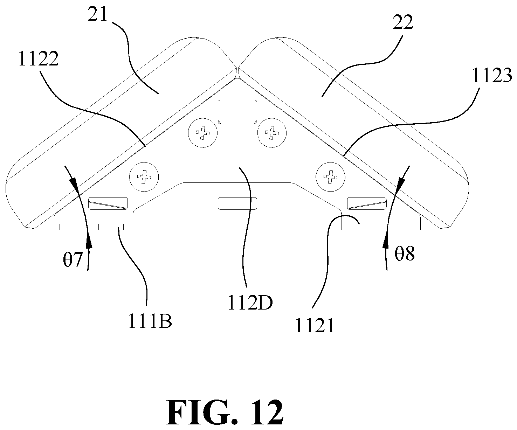

FIG. 10 is a perspective view of the fifth embodiment of the present invention, FIG. 11 is an exploded view of the fifth embodiment of the present invention, and FIG. 12 is a side view of the fifth embodiment of the present invention. As shown in FIGS. 10, 11 and 12, the difference between the fifth embodiment and the third embodiment is that: first, the bracket module 10B comprises a first bracket 11B and a second bracket 12. Secondly, the first bracket 11B comprises a connected plate 111B and a fixed plate 112D. The bottom edge 1121 of the fixed plate 112D of the first bracket 11B is disposed on the inner side of the connected plate 111B of the first bracket 11B. There is a first angle θ7 formed between the bottom edge 1121 and the first side 1122 of the fixed plate 112D of the first bracket 11B, and the first angle θ7 is greater than 0 degrees and less than 90 degrees. There is a second angle θ8 formed between the bottom edge 1121 and the second side 1123 of the fixed plate 112D of the first bracket 11B, and the second angle θ8 is greater than 0 degrees and less than 90 degrees. Thirdly, the second bracket 12 comprises a connected plate 111B and a fixed plate 112D, and the bottom edge 1121 of the fixed plate 112D of the second bracket 12 is disposed on the inner side of the connected plate 111B of the second bracket 12.

There is a first angle θ7 formed between the bottom edge 1121 and the bottom edge 1121 and the first side 1122 of the fixed plate 112D of the second bracket 12, and the first angle θ7 is greater than 0 degrees and less than 90 degrees. There is a second angle θ8 formed between the bottom edge 1121 and the second side 1123 of the fixed plate 112D of the bracket 12, and the second angle θ8 is greater than 0 degrees and less than 90 degrees. Fourthly, a first side and a second side of the casing 211 of the first radar 21 are respectively fixed to the inner side of the first side 1122 of the fixed plate 112D of the first bracket 11B and the inner side of the first side 1122 of the fixed plate 112D of the second bracket 12, and a first side and a second side of the casing 211 of the second radar 22 are respectively fixed to the inner side of the second side 1123 of the fixed plate 112D of the first bracket 11B and the inner side of the second side 1123 of the fixed plate 112D of the second bracket 12 .

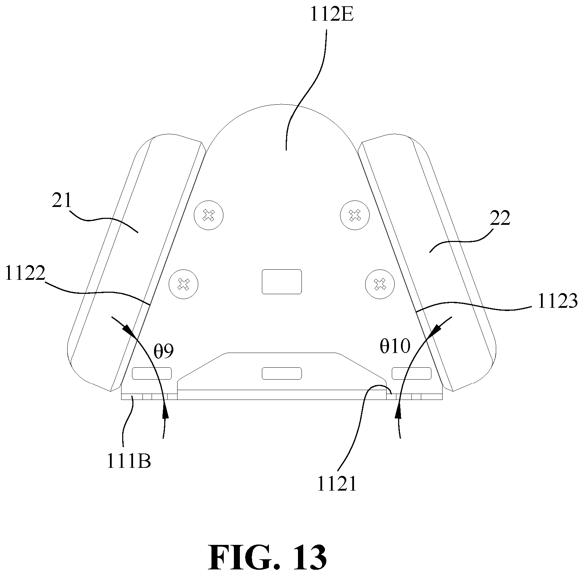

FIG. 13 is a side view of the sixth embodiment of the present invention. As shown in FIG. 13, the difference between the sixth embodiment and the fifth embodiment is that the bottom edge 1121 of each fixed plate 112E is shorter than the bottom edge of each fixed plate 112D, the first side 1122 of each fixed plate 112E is longer than the first side 1122 of each fixed plate 112D, and the second side 1123 of each fixed plate 112E is longer than the second side 1123 of each fixed plate 112D. Therefore, the first angle θ9 formed between the bottom edge 1121 and the first side 1122 of each fixed plate 112E is greater than the first angle θ7 formed between the bottom edge 1121 and the first side 1122 of each fixed plate 112D, and the second angle θ10 formed between the bottom edge 1121 and the second side 1123 of each fixed plate 112E is greater than the second angle θ8 formed between the bottom edge 1121 and the second side edge 1123 of each fixed plate 112D.

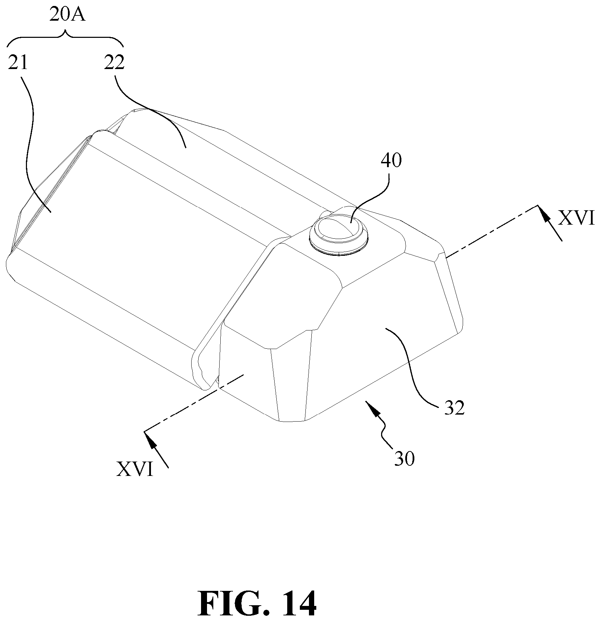

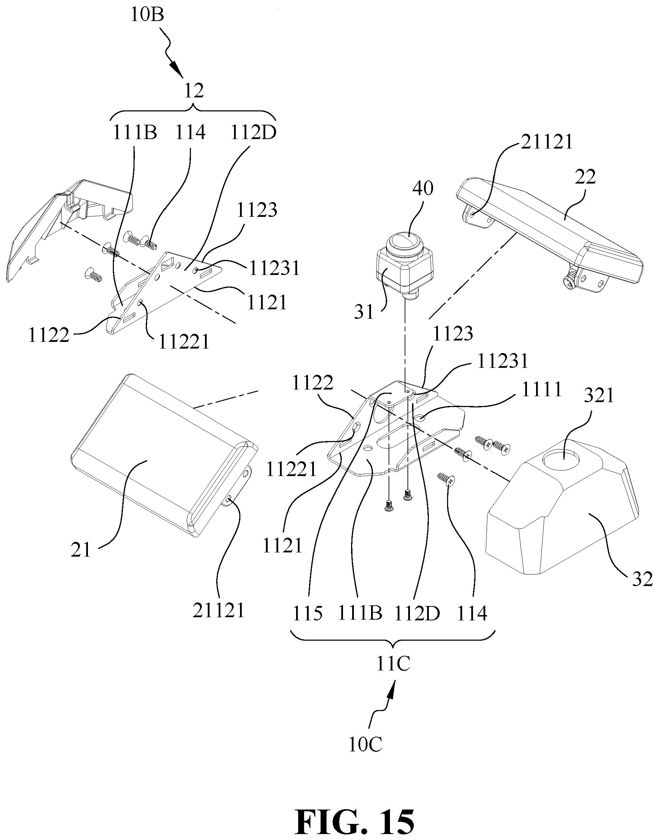

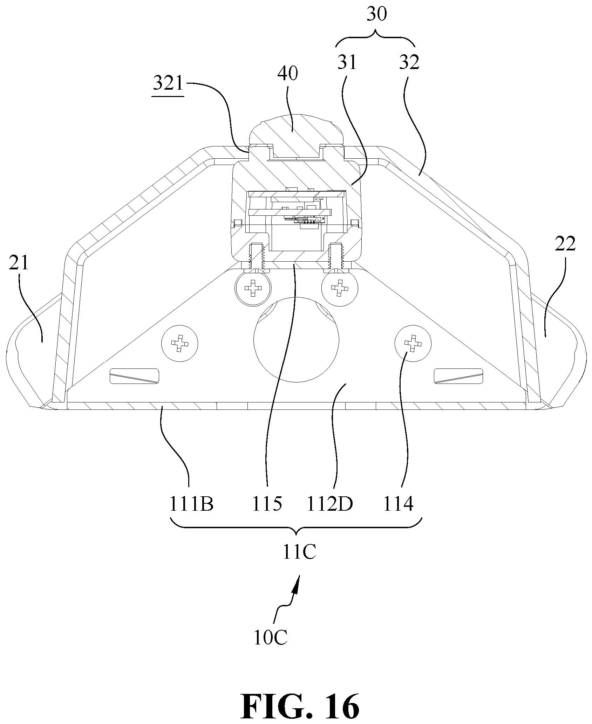

FIG. 14 is a perspective view of the seventh embodiment of the present invention, FIG. 15 is an exploded view of the seventh embodiment of the present invention, and FIG. 16 is a cross-sectional view taken along line XVI-XVI in FIG. 14. As shown in FIGS. 14, 15 and 16, the difference between the seventh embodiment and the fifth embodiment is that: first, the first bracket 11C of the bracket module 10C further comprises a positioning plate 115, and the positioning plate 115 is disposed on the first fixed plate 112D of the first bracket 11C; second, the automotive modular radar device of the present invention further comprises an adapter seat 30 and an image capturing device 40, and the adapter seat 30 comprises a base 31 and a cover 32. The base 31 is fixed to the positioning plate 115. The cover 32 covers the connected plate 111B and the positioning plate 115 of the first bracket 11C and has a through hole 321. The image capturing device 40 is arranged on the base 31 and passes through the through hole 321.

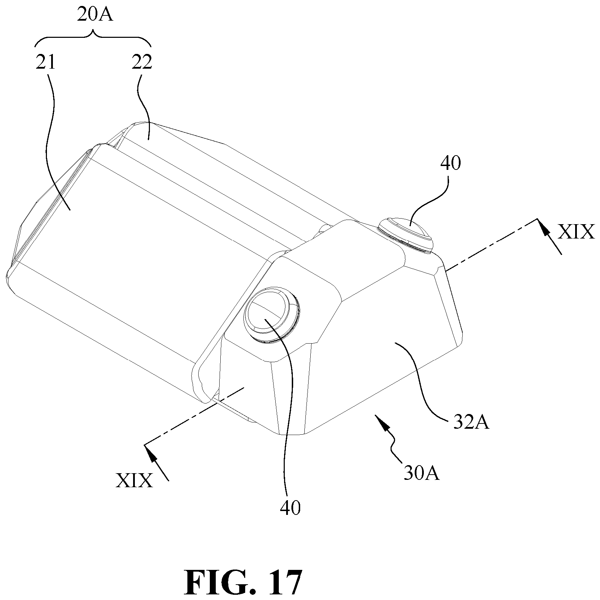

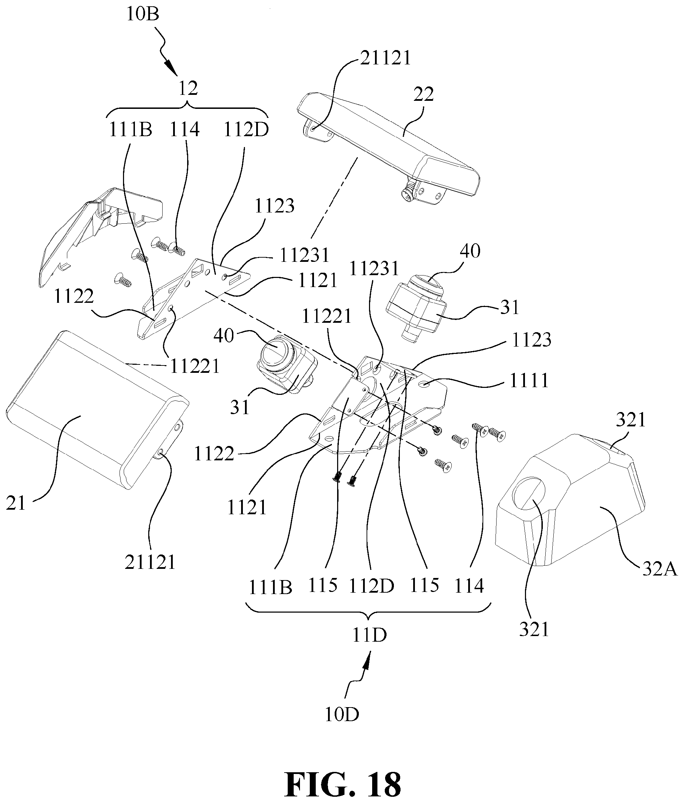

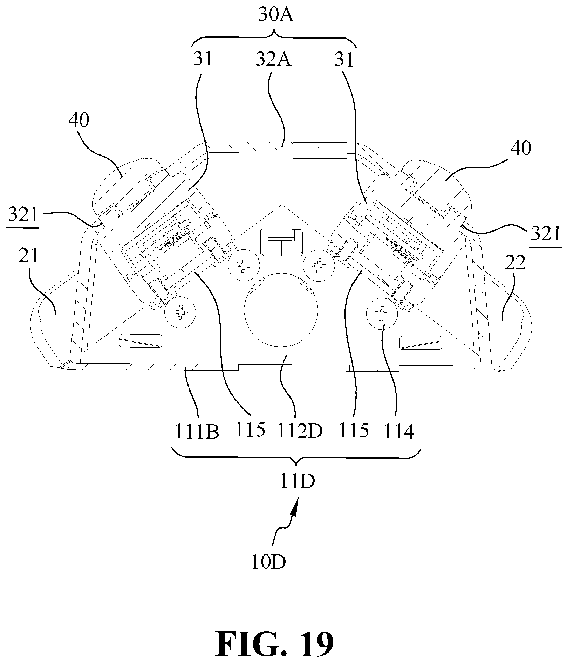

FIG. 17 is a perspective view of the eighth embodiment of the present invention, FIG. 18 is an exploded view of the eighth embodiment of the present invention, and FIG. 19 is a cross-sectional view taken along line XIX-XIX in FIG. 17. As shown in FIGS. 17, 18 and 19, the difference between the eighth embodiment and the seventh embodiment is that: first, the first bracket 11D of the bracket module 10D comprises two positioning plates 115, and the positioning plates 115 are respectively provided on the first side 1122 and the second side 1123 of the fixed plate 112D of the first bracket 11D; second, the automotive modular radar device of the present invention comprises an adapter seat 30A and two image capturing devices 40, and the adapter seat 30A comprises two bases 31 and a cover 32A. The bases 31 are respectively fixed to the positioning plates 115. The cover 32A covers the connected plate 111B and the positioning plates 115 of the first bracket 11D and has two through holes 321. The image capturing devices 40 are respectively disposed on the bases 31 and pass through the through holes 321.

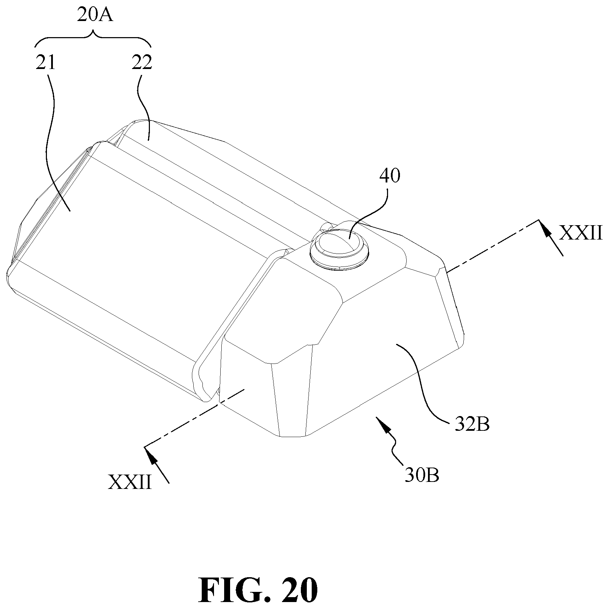

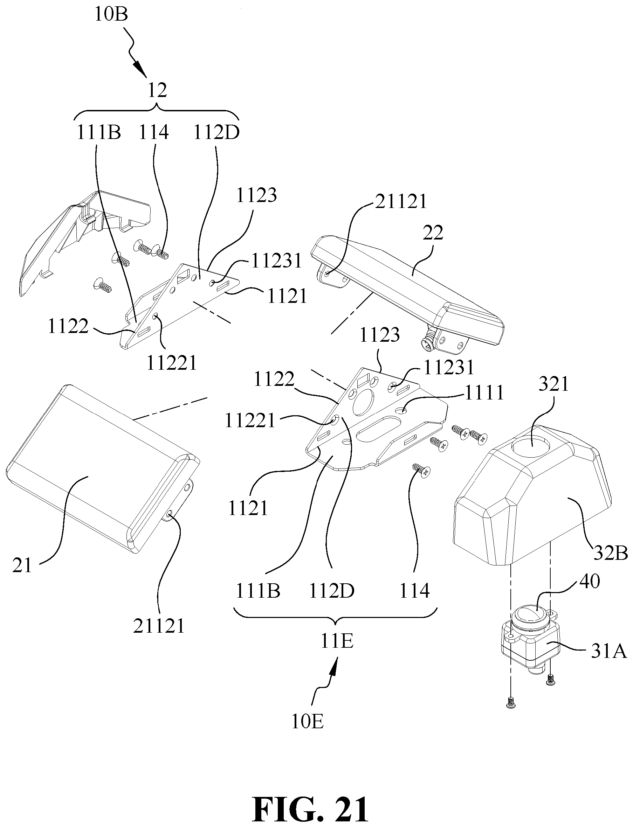

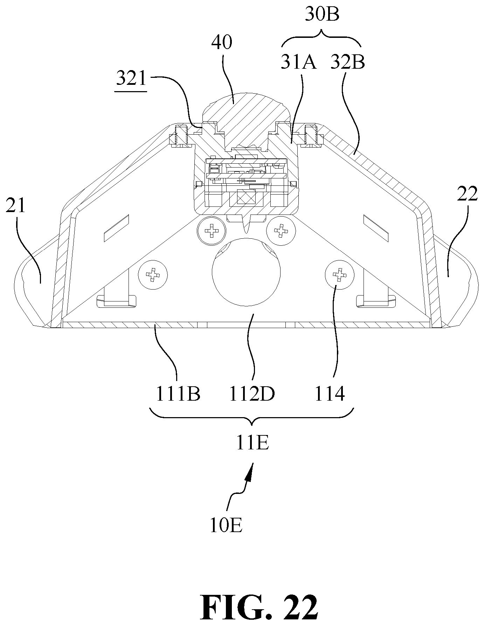

FIG. 20 is a perspective view of the ninth embodiment of the present invention, FIG. 21 is an exploded view of the ninth embodiment of the present invention, and FIG. 22 is a cross-sectional view taken along line XXII-XXII in FIG. 20. As shown in FIGS. 20, 21 and 22, the difference between the ninth embodiment and the seventh embodiment is that: first, the first bracket 11E of the bracket module 10E does not include the positioning plate 115; second, the adapter seat 30B comprises a base 31A and a cover 32B. The base 31A is fixed on the top of inner side of the cover 32B.

In summary, the casing 211 can provide good waterproof and dustproof effects, making the radar module 20 comply with the IP67 and IP69K specifications of the International Protection Marking.

Furthermore, the automotive modular radar device of the present invention can adjust the angle of the radar module 20 by replacing the bracket module 10 without opening the casing 211 of the radar module 20 and ruining the waterproof and dustproof effects. The range covered by the fields of view of the invented automotive modular radar device can also be adjusted.

In addition, the bracket module allows the installation of one or multiple radars. Therefore, some positions of the vehicle can use the field of view of one radar for detection, while some positions of the vehicle can use the fields of view of multiple radars for detection. The detection range is expanded and blind spots are less likely to occur.

In addition, the bracket module can allow the installation of one or more image capturing devices through an adapter socket. Therefore, the image capturing devices can capture actual images of objects detected by the radar, thereby assisting the radar device in detecting the surrounding environment to enhance vehicle safety or enhance autonomous driving capabilities.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An automotive modular radar device, applicable to a vehicle, comprising:
a bracket module, comprising a bracket, wherein the bracket comprises a connected plate and a fixed plate, wherein the connected plate is fixed to the vehicle, and the fixed plate has a bottom edge and one side, wherein the bottom edge of the fixed plate is disposed on the connected plate, an angle is formed between the bottom edge and the side of the fixed plate, and the angle is greater than 0 degrees and less than 90 degrees; and
a radar module, comprising a radar, wherein the radar comprises a casing, a circuit board, an antenna module, and a processing unit, wherein one side of the casing being is fixed to the side of the fixed plate, the circuit board is disposed inside the casing, the antenna module is disposed on the circuit board, the processing unit is disposed on the circuit board and is electrically connected to the antenna module,
wherein the casing covers the circuit board, the antenna module, and the processing unit to isolate and exclude external moisture and dust.

2. The automotive modular radar device according to claim 1, wherein the bracket further comprises a fastener, the connected plate is plate-shaped and has a first lock hole, and the fastener passes through the first lock hole and fixes the connected plate to the vehicle.

3. The automotive modular radar device according to claim 1, wherein the bracket further comprises a fastener, the fixed plate is plate-shaped, the side of the fixed plate has a second lock hole, one side of the casing has a third lock hole, and the fastener passes through the second lock hole and the third lock hole, so that one side of the casing is fixed to the side of the fixed plate.

4. The automotive modular radar device according to claim 1, wherein the casing comprises an upper casing, a lower casing, and a waterproof gasket, wherein the lower casing is combined with the upper casing, and the waterproof gasket is disposed in the upper casing, in the lower casing, or between the upper casing and the lower casing, and surrounding the outside of the circuit board.

5. The automotive modular radar device according to claim 4, wherein the lower casing or the upper casing comprises a waterproof and breathable device, and the waterproof and breathable device is used to prevent moisture from entering the casing from the outside.

6. The automotive modular radar device according to claim 4, wherein the lower casing comprises a signal connection part, and the signal connection part comprises a waterproof gasket.

7. The automotive modular radar device according to claim 1, wherein the bracket module comprises a first bracket, wherein the first bracket comprises two connected plates, two fixed plates, and a bottom plate, wherein the two fixed plates has bottom edges respectively disposed on inner sides of the connected plates, each of the fixed plates has a first side and a second side, and a first angle is formed between the bottom edge and the second side of each of the fixed plates, and the first angle is greater than 0 degrees and less than 90 degrees, wherein the bottom plate has a first side and a second side respectively disposed on inner sides of the first sides of the fixed plates, and the radar module comprises a first radar, wherein a first side and a second side of the casing of the first radar are respectively fixed to the inner sides of the second sides of the fixed plates.

8. The automotive modular radar device according to claim 1, wherein the bracket module comprises a first bracket, and the first bracket comprises a connected plate and two fixed plates, wherein the bottom edges of the fixed plates have inner sides respectively disposed on a first side and a second side of the connected plate, wherein each of the fixed plates has a first side and a second side, and a first angle is formed between the bottom edge and the first side of each of the fixed plates, and the first angle is greater than 0 degrees and less than 90 degrees, wherein a second angle is formed between the bottom edge and the second side of each fixed plate, and the second angle is greater than 0 degrees and less than 90 degrees, wherein the radar module comprises a first radar and a second radar, a first side and a second side of the casing of the first radar are respectively fixed to the inner sides of the first sides of the fixed plates, wherein a first side and a second side of the casing of the second radar are respectively fixed to the inner sides of the second sides of the fixed plates.

9. The automotive modular radar device according to claim 1, wherein the bracket module comprises a first bracket and a second bracket, wherein the first bracket comprises a connected plate and a fixed plate, the bottom edge of the fixed plate of the first bracket is disposed on an inner side of the connected plate of the first bracket, the fixed plate of the first bracket has a first side and a second side, a first angle is formed between the bottom edge and the first side of the fixed plate of the first bracket, the first angle is greater than 0 degrees and less than 90 degrees, a second angle is formed between the bottom edge and the second side of the fixed plate of the first bracket, and the second angle is greater than 0 degrees and less than 90 degrees, wherein the second bracket comprises a connected plate and a fixed plate, the bottom edge of the fixed plate of the second bracket is disposed on an inner side of the connected plate of the second bracket, the fixed plate of the second bracket has a first side and a second side, a first angle is formed between the bottom edge and the first side of the fixed plate of the second bracket, the first angle is greater than 0 degrees and less than 90 degrees, a second angle is formed between the bottom edge and the second side of the fixed plate of the second bracket, and the second angle is greater than 0 degrees and less than 90 degrees, wherein the radar module comprises a first radar and a second radar, a first side and a second side of the casing of the first radar are respectively fixed to the inner side of the first side of the fixed plate of the first bracket and the inner side of the first side of the fixed plate of the second bracket, and a first side and a second side of the casing of the second radar are respectively fixed to the inner side of the second side of the fixed plate of the first bracket and the inner side of the second side of the fixed plate of the second bracket.

10. The automotive modular radar device according to claim 1, further comprising an adapter seat and an image capturing device, the adapter seat being disposed on the bracket, and the image capturing device being disposed on the adapter seat.

11. The automotive modular radar device according to claim 10, wherein the bracket further comprises a positioning plate, the positioning plate is provided on the fixed plate, the adapter seat comprises a base and a cover, the base is fixed to the positioning plate, the cover covers the connected plate and the positioning plate and has a through hole, and the image capturing device is disposed on the base and penetrates the through hole.

12. The automotive modular radar device according to claim 10, wherein the adapter seat comprises a base and a cover, the base is fixed on the inner side of the top of the cover, the cover covers the connected plate and has a through hole, and the image capturing device is disposed on the base and penetrates the through hole.
